# FASCICULE DE BREVET EUROPEEN

(11) **EP 0 942 385 B1**
(45) Date de publication et mention de la délivrance du brevet: **17.05.2006**
(21) Numéro de dépôt: 99400565.0
(22) Date de dépôt: 09.03.1999
(51) Int. Cl.: G06K 7/08, G06K 7/10, G06K 7/00

(54) **Procédé et système de lecture d'un ensemble dynamique d'étiquettes portant des codes d'identification distincts**
Verfahren und System zum mehrmals Lesen einer Sammlung von Etiketten mit verschiedenen Identifikationskoden
Method and system for multiple reading of a group of labels having different identification codes

(30) Priorité: 12.03.1998 FR 9803060
(43) Date de publication de la demande: 15.09.1999
(73) Titulaire: COMMISSARIAT A L'ENERGIE ATOMIQUE, 75015 Paris (FR)
(72) Inventeur: Vacherand, François, 38800 Le Pont De Claix (FR); Crochon, Elisabeth, 38320 Poisat (FR)
(74) Mandataire: Audier, Philippe André

(56) Documents cités:
- EP-A- 0 405 695
- EP-A- 0 777 194
- FR-A- 2 677 135
- US-A- 4 862 160

## Description

### Domaine de l'invention

L'invention concerne un procédé de lecture d'un ensemble d'étiquettes munies chacune d'un code d'identification et pouvant entrer ou sortir, de façon aléatoire, d'un champ électromagnétique émis par un dispositif interrogateur. Elle concerne également un système mettant en oeuvre ce procédé.

L'invention trouve des applications dans le domaine de la reconnaissance d'individus porteurs de badges, ou dans les domaines de la comptabilisation et du contrôle d'objets porteurs d'étiquettes, tels que des bagages dans un aéroport, des marchandises dans un magasin, ou encore des produits dans une chaîne de production.

### Etat de la technique

De nombreux systèmes et procédés d'identification d'objets porteurs d'étiquettes sont connus actuellement de l'homme de métier. La plupart d'entre eux s'appliquent à une lecture multi-étiquettes.

Certains de ces procédés proposent une réémission du code de l'étiquette, après un temps aléatoire propre à chaque étiquette, lorsqu'il y a détection de collision de messages émis simultanément par les étiquettes.

Il existe aussi des procédés qui consistent à laisser une tranche de temps particulière pour la réponse d'une étiquette. Chaque tranche de temps est déterminée de manière univoque par le code d'identification de chaque étiquette. Cependant, ces procédés n'optimisent pas le temps de transaction entre le système interrogateur et l'ensemble des étiquettes. De plus, le temps mis par le procédé pour lire la totalité des étiquettes peut être basé sur le tirage de nombres aléatoires en supplément de l'aléa du nombre d'étiquettes présentes, ce qui implique qu'il n'est pas déterministe.

Un autre procédé, adapté uniquement à un ensemble statique d'étiquettes à lire une seule fois, est décrit dans le brevet français FR-A-2 677 135. Cette demande de brevet explique comment les étiquettes présentes dans le champ d'interrogation du système interrogateur sont amenées, par ledit système, à fournir successivement chaque bit de leur code d'identification, jusqu'à ce qu'il soit entièrement identifié. Pour cela, les étiquettes répondent à un signal de commande du dispositif interrogateur ; lorsqu'une étiquette détecte que le code en cours d'identification est différent du sien, elle s'inhibe momentanément (c'est-à-dire qu'elle devient "muette") de sorte que le cycle d'identification continue avec les autres étiquettes jusqu'à ce qu'il ne reste plus qu'une seule étiquette non inhibée ; le code de cette étiquette est alors identifié. En fin de cycle d'identification, sur une seule commande de l'interrogateur, l'étiquette identifiée s'inhibe définitivement et les autres étiquettes lèvent leur inhibition momentanée. La procédure d'identification est ensuite réinitialisée pour identifier une autre étiquette. Ces opérations sont répétées autant de fois que nécessaire pour identifier toutes les étiquettes séparément.

Cependant, cette technique ne peut être appliquée qu'à un ensemble statique d'étiquettes qui ne peuvent être lues qu'une seule fois. Elle ne peut donc être appliquée à un ensemble dynamique d'étiquettes, c'est-à-dire à des étiquettes pouvant entrer et sortir du champ électromagnétique du système interrogateur, de façon aléatoire.

Par ailleurs, le temps d'interrogation des étiquettes selon cette méthode est d'autant plus grand que le nombre d'étiquettes est important ; cette méthode est donc relativement longue, dès lors que le nombre d'étiquettes est important et que l'on veuille relancer un nouveau cycle de lecture en supprimant momentanément le champ électromagnétique émis par le dispositif interrogateur pour annuler l'inhibition définitive des étiquettes déjà identifiées.

### Exposé de l'invention

L'invention a justement pour but de remédier aux inconvénients des techniques citées précédemment. A cette fin, elle propose un procédé et un système de lecture d'un ensemble dynamique d'étiquettes présentes dans le champ électromagnétique d'un dispositif interrogateur, où le temps de vérification de présence des étiquettes déjà identifiées est minimisé, en attribuant, à chacune de ces étiquettes, un numéro d'ordre dont la taille binaire est nettement plus petite que celle du code d'identification.

De façon plus précise, l'invention concerne un procédé de lecture d'un ensemble dynamique d'étiquettes munies chacune d'un code d'identification distinct et situées dans le champ électromagnétique d'un dispositif interrogateur, le procédé consistant en une identification des étiquettes par une lecture successive de leurs codes au moyen d'émissions et de réceptions de signaux entre le dispositif interrogateur et les étiquettes. Ce procédé se caractérise par le fait qu'il consiste à effectuer un premier cycle de lecture pendant lequel chaque étiquette identifiée est inhibée et pendant lequel un numéro d'ordre est affecté à chacune des étiquettes identifiées de façon à permettre l'établissement d'une liste de toutes les étiquettes présentes dans le champ du dispositif interrogateur puis, à effectuer, lors de cycles de lecture suivants, une remise à jour de cette liste en réactivant les étiquettes déjà listées, en vérifiant, à partir de réponses ordonnées selon les numéros d'ordre de ces étiquettes, celles qui sont toujours présentes dans le champ et en retirant celles qui en sont sorties et en ajoutant les étiquettes qui viennent d'y entrer.

Avantageusement, lors de la remise à jour de la liste d'étiquettes, les numéros d'ordre des étiquettes sont modifiés en fonction des sorties et des entrées d'étiquettes dans le champ, de façon à ce que les numéros d'ordre de la liste soient consécutifs.

Selon l'invention, le numéro d'ordre de chaque étiquette est déterminé, parallèlement, par l'étiquette elle-même et par le dispositif interrogateur, à partir des informations échangées par les étiquettes et ledit dispositif interrogateur lors de l'identification des étiquettes.

Dans ce cas, le numéro d'ordre peut être initialisé automatiquement au niveau du dispositif interrogateur et au niveau de chaque étiquette.

L'invention concerne aussi un système de lecture comprenant un ensemble dynamique d'étiquettes et un dispositif interrogateur, les étiquettes étant munies chacune d'un code d'identification distinct et étant situées dans le champ électromagnétique du dispositif interrogateur, les étiquettes étant identifiées par une lecture successive de leurs codes au moyen d'émissions et de réceptions de signaux entre le dispositif interrogateur et les étiquettes, caractérisé en ce que le système est apte à effectuer un premier cycle de lecture pendant lequel chaque étiquette identifiée est inhibée et pendant lequel un numéro d'ordre est affecté à chaque étiquette identifiée, de façon à permettre l'établissement d'une liste de toutes les étiquettes présentes dans le champ du dispositif interrogateur, puis à effectuer, lors de cycles de lecture suivants, une remise à jour de cette liste en réactivant les étiquettes déjà listées, en vérifiant, à partir de réponses ordonnées selon les numéros d'ordre de ces étiquettes, celles qui sont toujours présentes dans le champ et celles qui en sont sorties et en ajoutant les étiquettes qui viennent d'y entrer.

L'invention concerne un tel système, dans lequel le dispositif interrogateur peut comporter en outre :
- une mémoire de stockage des codes d'identification ;
- des moyens de séquencement ;
- un pointeur pour pointer sur sa mémoire de stockage ;
- un compteur pour compter le nombre d'étiquettes présentes ; et
- un registre de mémorisation du nombre d'étiquettes courantes.

Il se caractérise également par le fait que chaque étiquette peut comporter :
- des moyens de séquencement ;
- une mémoire de stockage du code d'identification ;
- une bascule d'état de première lecture du code d'identification ;
- une bascule d'inhibition momentanée pour la phase d'identification de son code ;
- une bascule d'inhibition cyclique pour la phase de vérification de la présence de l'étiquette ;
- un registre de stockage de son numéro d'ordre ;
- un compteur de numéro d'ordre ; et
- un décompteur de numéro d'ordre.

### Brève description des figures

- La figure 1 représente schématiquement les étapes générales du procédé de l'invention ;
- la figure 2A représente schématiquement les étapes de fonctionnement du dispositif interrogateur ;
- la figure 2B représente schématiquement les étapes d'initialisation de la liste d'étiquettes ;
- la figure 2C représente schématiquement les étapes de mise à jour de la liste d'étiquettes ;
- la figure 3 représente schématiquement les étapes de fonctionnement d'une étiquette ;
- la figure 4 représente le chronogramme de vérification de la liste d'étiquettes dans un exemple où la liste contient initialement quatre étiquettes ; et
- la figure 5 représente schématiquement le système de lecture d'étiquettes de l'invention.

### Description de modes de réalisation préférés de l'invention

Le procédé de l'invention consiste à inventorier, en permanence, un ensemble dynamique d'étiquettes radiofréquences présentes dans le champ électromagnétique d'un dispositif interrogateur (appelé par la suite simplement "interrogateur") et à minimiser le temps de vérification de présence des étiquettes dans ce champ électromagnétique, de façon à prendre en compte très rapidement l'arrivée ou le départ asynchrone d'une étiquette dans ce champ électromagnétique.

Plus précisément, cette minimisation du temps de vérification de présence des étiquettes se fait en attribuant à chacune des étiquettes un numéro d'ordre qui permettra, ensuite, de vérifier la présence ou non de l'étiquette dans le champ électromagnétique, sans nécessiter une relecture complète du code d'identification de l'étiquette.

Il est à noter que, compte tenu du nombre maximum réaliste d'étiquettes pouvant être présentes simultanément dans le champ d'un interrogateur (dû aux limitations physiques et électromagnétiques de l'interrogateur), le numéro d'ordre attribué à chaque étiquette aura une longueur en bits bien plus réduite que la longueur du code d'identification. Par exemple, on peut envisager, avec un numéro d'ordre de longueur de 8 bits, de gérer simultanément 255 étiquettes ayant chacune un code d'identification de 64 ou 128 bits, par exemple.

Le procédé de l'invention permet ainsi de maintenir à jour, en permanence, une liste d'étiquettes et cela avec un temps de rafraîchissement le plus court possible.

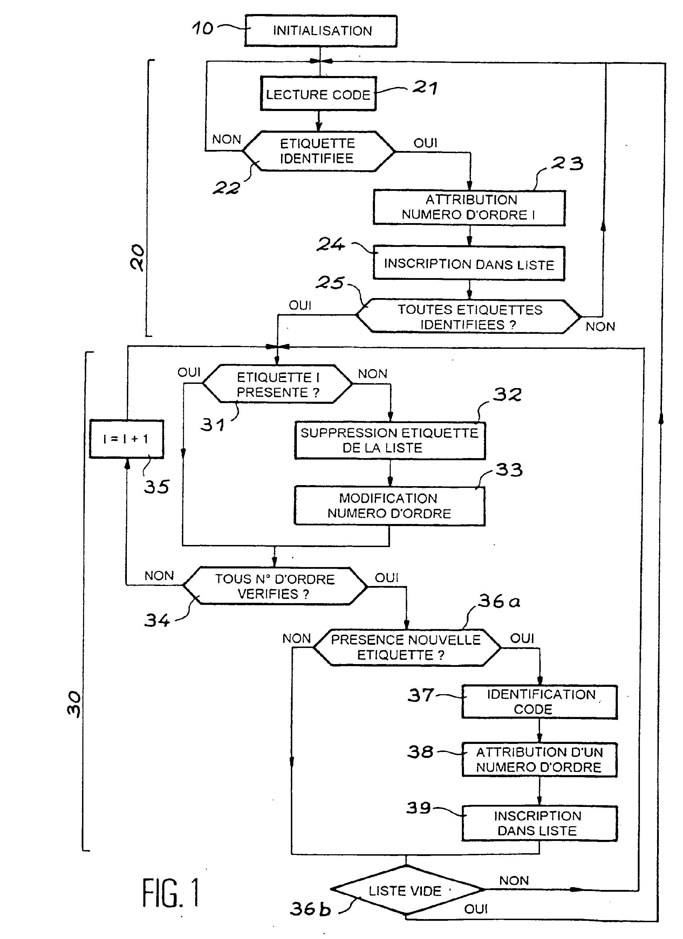

Sur la figure 1, on a représenté l'organigramme général du procédé de l'invention. Ce procédé consiste tout d'abord en une initialisation du dispositif interrogateur. Cette phase d'initialisation 10 consiste notamment à vérifier s'il y a présence d'au moins une étiquette dans le champ électromagnétique de l'identificateur. Si cette interrogation de présence est positive, alors l'interrogateur tente une lecture simple en faisant l'hypothèse qu'une seule étiquette vient d'arriver. Si le code lu est erroné, il fait l'hypothèse que plusieurs étiquettes viennent de pénétrer dans le champ ; il exécute alors le cycle d'initialisation 20. Une telle phase d'initialisation est décrite précisément dans la demande de brevet dont le numéro d'enregistrement est 96 15434, déposée au nom de la demanderesse. Ce procédé consiste, après l'initialisation 10, en un cycle de lecture destiné à identifier toutes les étiquettes présentes dans le champ de l'interrogateur ; ce cycle de lecture porte la référence 20, sur la figure 1. Le procédé de l'invention comporte ensuite une succession de cycles de remise à jour, référencés 30, qui consistent à vérifier si des étiquettes de la liste sont sorties du champ de l'interrogateur, ou, au contraire, si de nouvelles étiquettes sont entrées dans ce champ de l'interrogateur.

Lorsque l'identificateur a été initialisé, en 10, une phase 20 d'identification des étiquettes (ou cycle de lecture) est mise en oeuvre ; celle-ci consiste tout d'abord en une lecture des codes de chacune des étiquettes. Cette phase d'identification des étiquettes reprend sensiblement le procédé décrit dans le brevet FR-A-2 677 135. En effet, cette phase d'identification 20 consiste à lire chaque bit constituant le code d'identification de chacune des étiquettes. Cette lecture bit à bit est représentée par le bloc 21 de la figure 1. Un test 22 consiste ensuite à vérifier si une étiquette a été entièrement identifiée ; si aucune étiquette n'a été identifiée, alors la lecture bit à bit 21 continue ; dans le cas contraire, c'est-à-dire si un code d'étiquette vient d'être déterminé, alors on attribue à cette étiquette identifiée un numéro d'ordre I (bloc 23) et on inscrit ce numéro d'ordre I dans une liste (bloc 24). Ce numéro d'ordre peut varier de 1 à N, N étant le nombre total d'étiquettes. Un test 25 consiste ensuite à vérifier si toutes les étiquettes présentes dans le champ de l'interrogateur ont bien été identifiées ; si ce n'est pas le cas, la phase d'identification 20 est recommencée au début, c'est-à-dire au bloc de lecture 21 ; au contraire, si toutes les étiquettes ont bien été identifiées, alors commence un premier cycle 30 de remise à jour de la liste, suivi d'une pluralité de cycles de remise à jour, tous identiques et effectués de façon cyclique.

Comme on le voit sur la figure 1, le cycle d'identification des étiquettes (appelé aussi étape d'initialisation de la liste) se termine par l'établissement, par l'interrogateur, d'une première liste d'étiquettes présentes. A ce moment, les étiquettes ont leur bit d'inhibition cyclique (par opposition aux bits d'inhibition momentanée) qui est activé. Ce bit d'inhibition cyclique correspond, en fait, au bit d'inhibition dite "définitive" du brevet français FR-A-2 677 135 ; toutefois, dans l'invention, cette inhibition n'est pas définitive mais cyclique puisqu'à chaque cycle de mise à jour 30, ce bit est réactivé de façon à ce que l'étiquette puisse à nouveau être interrogée.

Le premier cycle de remise à jour 30 comporte une première étape 31 de contrôle de présence de l'étiquette I. Si cette étiquette I n'est pas présente dans le champ de l'interrogateur, alors on en déduit qu'elle est sortie du champ ; il y a, par conséquent, suppression de cette étiquette dans la liste (étape 32) puis modification de l'ensemble des numéros d'ordre des étiquettes de la liste (étape 33). Un test 34 consiste ensuite à vérifier si tous les numéros d'ordre ont bien été vérifiés.

Si l'étiquette I a été détectée comme présente dans le champ de l'interrogateur, alors le procédé passe directement au test 34.

Si tous les numéros d'ordre n'ont pas été vérifiés, alors le procédé passe au numéro d'ordre suivant I + 1 (étape 35) et recommence le procédé à partir du test 31.

Lorsque tous les numéros d'ordre de la liste ont bien été vérifiés, alors on passe au test 36a qui consiste à vérifier la présence éventuelle de nouvelles étiquettes dans le champ de l'interrogateur.

Si l'identificateur détecte la présence d'une ou de plusieurs nouvelles étiquettes dans son champ électromagnétique, alors il effectue une procédure 37 d'identification de code de ces nouvelles étiquettes ; cette procédure 37 d'identification de code comporte des étapes identiques à celles des blocs 21 et 22. L'interrogateur attribue ensuite un numéro d'ordre à chacune des nouvelles étiquettes (étape 38) et les inscrit dans la liste (étape 39). Un nouveau cycle de mise à jour est alors effectué. Si, lors du test 36a, l'interrogateur ne détecte aucune nouvelle étiquette dans son champ, alors le premier cycle de mise à jour est terminé et un nouveau cycle de mise à jour est commencé en retournant au test 31.

Cette phase de mise à jour 30 se décompose en deux étapes principales :
- une étape de vérification de présence des étiquettes listées lors du cycle d'identification 20 (comprenant les étapes 31 à 35), au cours de laquelle sont gérés les éventuels départs d'étiquettes. Cette vérification de présence des étiquettes utilise les numéros d'ordre afin de vérifier, le plus rapidement possible, la présence des étiquettes déjà listées dans le champ de l'interrogateur. Un message de "début de vérification" déverrouille le bit d'inhibition cyclique (décrit ultérieurement) de chacune des étiquettes. Ce bit est à nouveau verrouillé lorsque l'étiquette a répondu qu'elle est présente. En cas de départ d'une ou de plusieurs étiquettes, les numéros d'ordre sont réordonnés ;
- une deuxième étape qui comprend les blocs 36a à 39 et au cours de laquelle l'arrivée éventuelle de nouvelles étiquettes dans le champ de l'interrogateur est vérifiée ; ces nouvelles étiquettes sont alors rajoutées à la liste. Cette étape est sensiblement similaire à la phase 20 d'initialisation de la liste déjà décrite, sauf en ce qui concerne les numéros d'ordre qui font suite à ceux de la liste courante.

L'interrogateur maintient ainsi en permanence une liste de l'ensemble des étiquettes présentes. Cette liste est ordonnée à la fois par la chronologie de l'arrivée d'étiquette et par la relation d'ordre créée par l'algorithme de lecture multiple sur le poids des codes d'identification.

Si après l'étape 39, la liste est vide (test 36b), alors le système se remet en attente d'étiquettes et reprend au début de la phase 20 ; par contre, si la liste n'est pas vide, le système reprend le cycle de mise à jour 30.

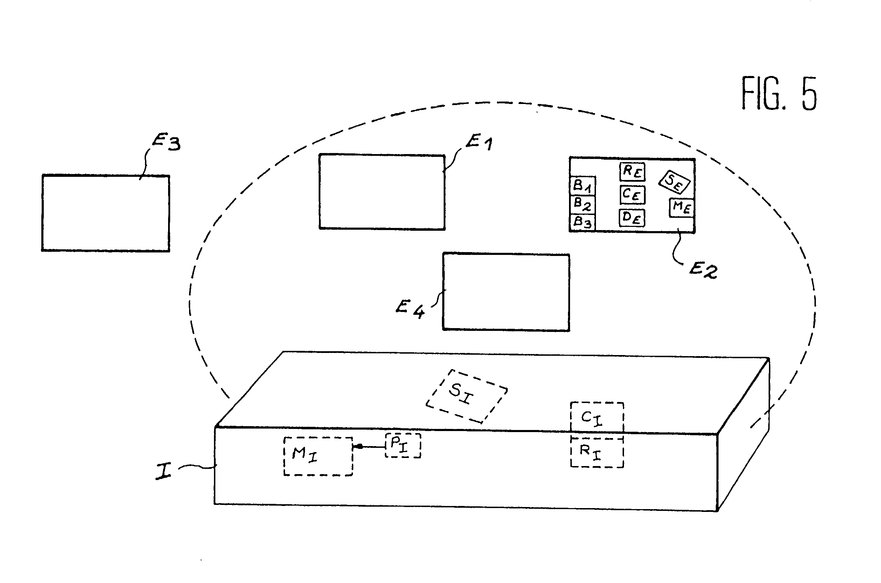

Le procédé qui vient d'être décrit dans son ensemble est mis en oeuvre par un système de lecture d'étiquettes qui comporte un dispositif interrogateur, d'une part, et des étiquettes, d'autre part. Ce système est représenté sur la figure 5.

Le dispositif interrogateur, référencé I et appelé plus simplement "interrogateur", comporte au moins les éléments suivants :
- des moyens de séquencement S_{I} ;
- une mémoire M_{I} de stockage des codes d'identification ;
- un pointeur P_{I} qui pointe sur la mémoire de stockage ;
- un compteur C_{I} du nombre d'étiquettes présentes ; et
- un registre R_{I} de mémorisation du nombre d'étiquettes courantes.

Chacune des étiquettes E₁, E₂, E₃, E₄ comporte les moyens suivants :
- des moyens de séquencement S_{E} ;
- une mémoire M_{E} de stockage du code d'identification ;
- une bascule B₁ d'état de première lecture du code d'identification ;
- deux bascules d'inhibition :
   - une bascule B₂ d'inhibition momentanée pour la phase d'identification de son code ; et
   - une bascule B₃ d'inhibition cyclique pour la phase de vérification de la présence de l'étiquette ;
- un registre R_{E} de stockage de son numéro d'ordre ;
- un compteur C_{E} de numéros d'ordre ; et
- un décompteur D_{E} de numéros d'ordre.

Par mesure de simplification de la figure, seuls les moyens constituant l'étiquette E₂ ont été représentés, les étiquettes E₁, E₃, E₄ étant identiques à l'étiquette E₂.

Comme on vient de le voir, chaque étiquette comporte un compteur de numéros d'ordre CE qui lui permet de calculer automatiquement son numéro d'ordre ; ce compteur incrémente le numéro d'ordre en détectant et en comptant les autres étiquettes identifiées par l'interrogateur I au cours de son cycle de comptage. Ne sont prises en compte que les étiquettes présentes au début du cycle. Ce compteur est initialisé à 0 en début de cycle de comptage, c'est-à-dire du cycle 20 de la figure 1. Il s'incrémente chaque fois que l'étiquette reçoit les commandes suivantes :
- "TOP" de comptage (ce qui correspond à une "lecture à 1") pendant la phase de vérification de liste, quel que soit son état, c'est-à-dire si l'étiquette a déjà était listée, si elle n'a pas encore été listée, s'il s'agit de la phase de première lecture, ou si c'est une lecture de mise à jour ;
- "lecture simple" (suivie d'un "code correctement lu") dans le cas d'une étiquette non encore listée ; ou
- "début de séquence de lecture multiple" et à chaque réception du message "code correctement lu" (cf annexe), dans le cas d'une étiquette non encore listée.

Ce comptage est effectué jusqu'à ce que l'étiquette soit vérifiée, si elle est déjà listée, ou jusqu'à ce qu'elle soit identifiée, si c'est la première fois qu'elle est lue. Après quoi, le comptage reste figé jusqu'au cycle de mise à jour suivant. A la fin de la première lecture, ou à la vérification, le contenu du compteur C_{E} est sauvegardé dans le registre R_{E} de numéros d'ordre.

Le registre R_{E} de sauvegarde du numéro d'ordre mémorise, pendant la durée d'un cycle, la valeur du numéro d'ordre de l'étiquette. Il est initialisé à 0 au moment de la mise sous tension de l'étiquette, puis initialisé selon le numéro d'ordre courant, après la première lecture du code d'identification. Il est remis à jour après chaque vérification de présence de la part de l'interrogateur.

Le décompteur DE de numéros d'ordre : en début de la séquence correspondant à la commande de début de vérification des listes, ce décompteur est chargé avec la valeur du numéro d'ordre contenu dans le registre. Il est aussitôt décrémenté. A chaque "TOP" de comptage reçu, c'est-à-dire chaque fois que l'interrogateur ré-émet "lecture d'un 0", ou "lecture d'un 1", le contenu de ce décompteur est décrémenté. Lorsqu'il atteint la valeur 0, l'étiquette envoie un signal de présence sous forme de signal "bit à 1". Puis l'étiquette peut sauvegarder le contenu du registre de comptage et s'inhiber jusqu'au cycle suivant.

Le système de lecture de l'invention comportant un interrogateur, d'une part, et des étiquettes, d'autre part, on comprendra aisément que le procédé de l'invention se décompose en deux phases de traitement : une phase de traitement réalisée par l'étiquette et une phase de traitement réalisée par l'interrogateur.

Du point de vue de l'interrogateur, on distingue aussi deux cycles définis en fonction de l'état de la liste d'étiquettes couramment répertoriée :
- lorsque la liste est vide : un cycle d'initialisation (correspondant à la référence 10 de la figure 1) ; et
- lorsque la liste n'est pas vide : un cycle de mise à jour (correspondant à la référence 30 sur la figure 1).

Du point de vue de l'étiquette, on distingue également deux cycles définis en fonction de l'état de l'étiquette :
- si l'étiquette n'a pas été lue : un cycle de première lecture (correspondant à la référence 20 ou 37 de la figure 1) ; et
- si l'étiquette a déjà été lue : un cycle de mise à jour du numéro d'ordre (ce qui correspond à la référence 30 de la figure 1).

Une étiquette ne peut participer à un cycle de comptage (c'est-à-dire une séquence pendant laquelle les étiquettes sont comptées) uniquement si elle reçoit le message correspondant au début d'un des deux cycles décrits précédemment et ce, afin de pouvoir compter toutes les étiquettes présentes. Si l'étiquette ne reçoit pas ce message, alors elle attend le début du cycle suivant.

Comme on vient de le voir, l'interrogateur et l'étiquette peuvent être chacun dans deux modes. Les combinaisons possibles de ces modes donnent alors plusieurs cas possibles :
a) la liste est vide et l'étiquette est en première lecture : si l'étiquette est seule dans le champ de l'interrogateur, alors elle répond à la sollicitation de lecture simple en envoyant son code d'identification et elle initialise son registre de numéro d'ordre à 1. S'il y a plusieurs étiquettes présentes et donc non encore lues, la séquence de lecture multiple est lancée. Dans ce cas, chaque étiquette compte le nombre d'étiquettes correctement lues jusqu'à ce qu'elle soit elle-même lue. Ce nombre sera son numéro d'ordre et il sera sauvegardé dans un registre interne dès réception de la confirmation que son code a été correctement lu. Le compteur interne de l'étiquette peut éventuellement continuer à compter pour disposer, à bord de l'étiquette, de l'information du nombre total d'étiquettes présentes si nécessaire.
b) La liste n'est pas vide et l'étiquette est en première lecture : chaque nouvelle étiquette compte le nombre d'étiquettes encore présentes pendant la phase de vérification de liste. Elle le fait en interprétant les informations retournées par l'interrogateur, indiquant la présence ou non de l'étiquette déjà lue. A partir de là, elle exécute un mécanisme similaire à celui du cas a). Si l'étiquette est seule, elle initialise son numéro d'ordre au compte des étiquettes précédemment lues, plus 1. S'il y a plusieurs étiquettes nouvellement arrivées, elle continue la séquence de comptage en incrémentant le compte des étiquettes à chaque réception d'un message de lecture de code correct jusqu'à ce qu'elle-même soit correctement lue.
c) La liste n'est pas vide et l'étiquette est déjà lue : l'étiquette ne répond qu'à la commande de vérification de liste, en émettant un signal de présence à "1", quand c'est à son tour d'émettre. Ce moment est déterminé quand un décompteur interne atteint la valeur 0. Il est initialisé avec la valeur du numéro d'ordre en début de phase de vérification de liste et décompte les étiquettes déjà vérifiées présentes ou non.

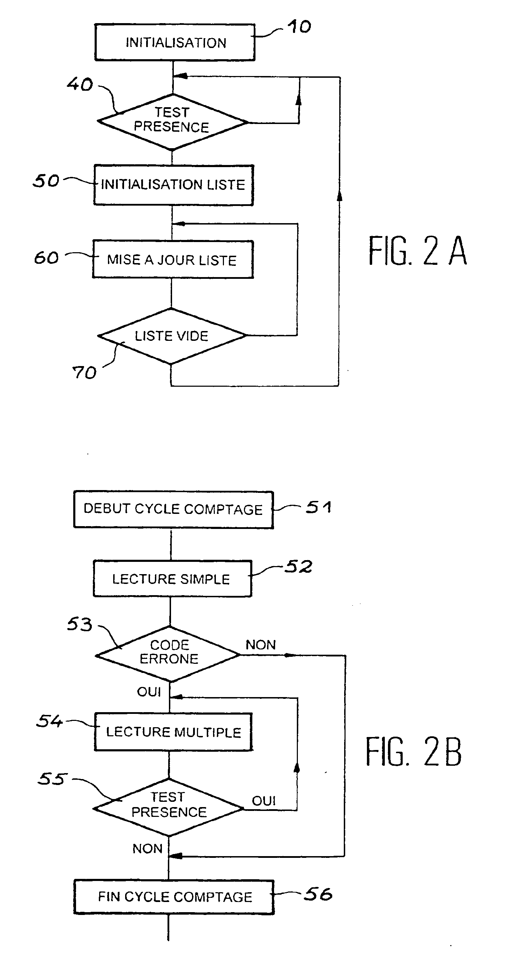

Sur la figure 2A, on a représenté le fonctionnement général de l'interrogateur. Le fonctionnement de l'interrogateur consiste en une initialisation 10, puis en un test de présence 40 pour vérifier la présence d'étiquettes dans son champ électromagnétique. Si aucune étiquette n'est détectée alors le procédé boucle sur lui-même, c'est-à-dire que le traitement reprend au début du test de présence jusqu'à ce qu'une étiquette arrive dans le champ électromagnétique.

Au contraire, si l'interrogateur détecte la présence d'au moins une étiquette dans son champ électromagnétique, alors le procédé consiste à effectuer une initialisation 50 de la liste, puis une mise à jour 60 de cette liste et enfin un test 70 de vérification de l'état de la liste (c'est-à-dire si elle est vide ou non).

Si la liste est vide alors le traitement retourne au début du test de présence 40. Si la liste n'est pas vide alors le traitement consiste à retourner au début de l'étape de mise à jour 60 de la liste.

Sur la figure 2B, puis sur la figure 2C, on a représenté, de façon plus détaillée, les étapes respectives d'initialisation 50 de la liste et de mise à jour 60 de la liste.

La figure 2B montre donc le fonctionnement de l'interrogateur lors de l'initialisation de la liste. La phase d'initialisation de la liste prend en compte la possibilité qu'il y ait plusieurs étiquettes dans le champ électromagnétique de l'interrogateur et si et seulement si elle a reçu un message de début de cycle de comptage.

Elle comporte un début de cycle de comptage 51, puis une tentative de lecture simple d'une étiquette 52, c'est-à-dire que l'interrogateur suppose qu'il n'y a qu'une seule étiquette dans son champ interrogateur ; en 53, l'interrogateur vérifie si le code lue précédemment est erroné ou non. Si le code est erroné, alors le traitement se poursuit par l'étape 54 de lecture multiple du type de celle décrite dans le brevet antérieur FR-A-2 677 135. Cette étape 54 est l'exécution d'une séquence de l'algorithme de lecture multiple avec incrémentation de 1 du nombre d'étiquettes si le code lu est correct.

A l'étape 55, l'interrogateur effectue un test de présence d'étiquettes, c'est-à-dire qu'il vérifie si des étiquettes non lues sont présentes. Si c'est le cas, le traitement reprend au début de l'étape 54 de lecture multiple. Dans le cas contraire, on considère que le cycle de comptage est terminé (référence 56). Dans le cas où le test de code erroné (bloc 53) s'avère négatif, alors le procédé passe directement au début de l'étape 56 de fin de cycle de comptage.

Sur la figure 2C, on a représenté de façon plus détaillée l'organigramme de mise à jour de la liste par l'interrogateur. Cette phase de mise à jour 60 de la liste prend en compte la possibilité qu'il y ait plusieurs étiquettes arrivant quasi-simultanément dans le champ de l'interrogateur. Cette phase comporte une première étape 61 de début de cycle de comptage, puis une étape 62 d'envoi, par l'interrogateur, d'une instruction de vérification, de la présence des étiquettes déjà listées, avec le retrait éventuel des étiquettes qui ne sont plus présentes dans le champ interrogateur. Le fonctionnement de l'interrogateur comporte ensuite une étape 63 de test de présence. Ce test de présence consiste à vérifier si de nouvelles étiquettes sont présentes dans le champ de l'interrogateur. Si c'est le cas, alors le procédé passe à l'étape suivante 64 de lecture simple. Si ce n'est pas le cas, il passe au début de l'étape 68 de fin de cycle de comptage. Les étapes 64, 65, 66 et 67 correspondent en fait, respectivement, aux étapes 52, 53, 54 et 55 de la figure 2B. Le procédé ne sera donc pas redécrit pour ces étapes 64 à 67.

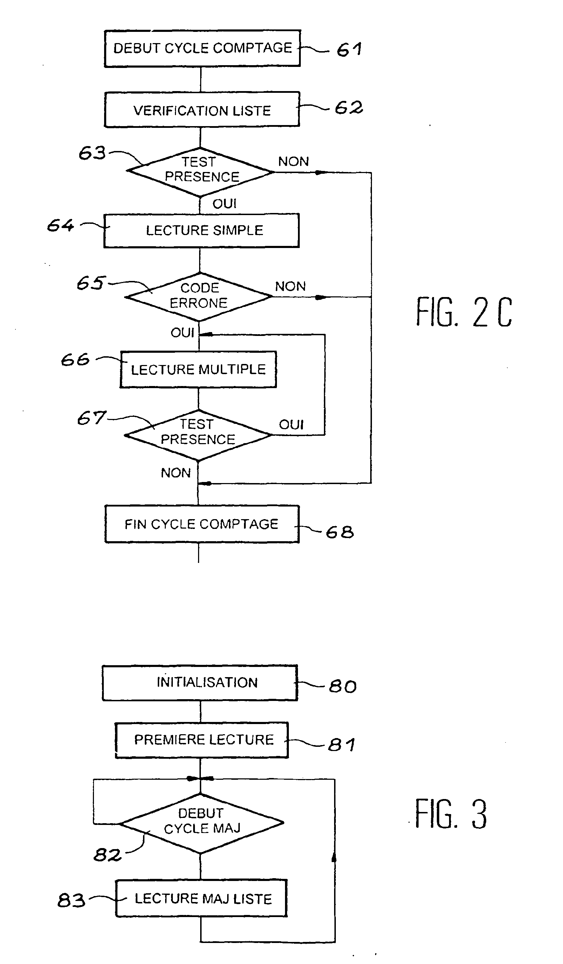

Sur la figure 3, on a représenté le fonctionnement général d'une étiquette. Lorsque l'étiquette s'autoalimente en pénétrant dans le champ électromagnétique de l'interrogateur, elle s'initialise, et le bit de première lecture est mis à 0. Elle attend alors une commande venant de l'interrogateur pour l'activer. Cette commande sera soit un ordre de lecture simple, auquel cas elle enverra son code d'identification, soit le début du protocole de lecture multiple. L'étiquette ne répondra à aucun autre ordre venant de l'interrogateur et si et seulement si elle a reçu un message de début de cycle de comptage.

Après avoir été lue selon l'un des deux modes cités précédemment, à savoir lecture simple ou lecture multiple, l'étiquette s'inhibe durant le reste du cycle à toute demande de lecture de son code ou de vérification de son numéro d'ordre (bit d'inhibition cyclique mis à 1 et bit de première lecture mis à 1).

Quand l'étiquette répond à un test de présence et après acquittement par l'interrogateur, elle s'inhibe, pendant le reste du cycle de mise à jour de la liste, à toute autre lecture ou vérification du code d'identification. Son bit d'inhibition de cycle est mis à 1. Il est remis à 0 à chaque début de cycle.

Une étiquette pénétrant dans le champ interrogateur peut très bien entendre une commande et ne pas être entendue par l'interrogateur. En effet, le champ électromagnétique rayonné par l'interrogateur peut être fort alors que le couplage mutuel est encore trop faible, à cause de la distance pour que l'étiquette puisse être entendue par l'interrogateur. Afin d'éviter toute confusion, l'interrogateur envoie un signal d'acquittement à l'étiquette pour lui signifier qu'elle a été entendue.

Plus précisément, le fonctionnement de l'étiquette consiste en une étape 80 d'initialisation de l'étiquette, puis une étape 81 de première lecture. Un test 82 consiste ensuite à vérifier si l'on se trouve en début de cycle de mise à jour. S'il s'agit bien du début de cycle de mise à jour, alors le traitement se poursuit par une lecture de mise à jour de la liste. Dans le cas contraire, le traitement est repris au niveau du test 82.

Après la lecture de mise à jour de la liste 83, le traitement reprend au début du test 82.

Comme on l'a vu précédemment sur la figure 2C, au début de la séquence de mise à jour de la liste, l'interrogateur envoie une instruction de "vérification de la liste", qui a pour but de vérifier la présence des étiquettes déjà listées. Ce sont donc seulement les étiquettes ayant déjà été lues qui seront concernées, c'est-à-dire dont le bit de première lecture est à 1. Ainsi, lorsque l'interrogateur émet la commande de "début de vérification de liste" (cf annexe), toutes les étiquettes déjà lues au cours d'un cycle de lecture précédente mettent leur bit d'inhibition de cycle à 0 afin de participer au comptage. En outre, toutes les étiquettes déjà lues transfèrent, dans leur décompteur de numéros d'ordre, la valeur du registre de numéros d'ordre décrémentée de 1. De plus, toutes les étiquettes remettent à 0 leur compteur de numéros d'ordre ; l'interrogateur met son pointeur de code d'identification en début de liste ; l'indice maximum de boucle est initialisé avec le contenu du registre de nombre d'étiquettes présentes comptabilisées par l'interrogateur et le compteur de nombre d'étiquettes de l'interrogateur est remis à 0.

On effectue ensuite N fois le cycle suivant l'indice de boucle I (où N est le nombre d'étiquettes présentes déjà lues au cycle de comptage précédent). Il y a alors émission d'un 1 par l'étiquette de numéro d'ordre I, si elle est présente, et si son décompteur de numéros d'ordre atteint la valeur 0 ; si elle n'est pas présente, il n'y a pas d'émission, ce qui correspond à une émission d'un 0 pour l'interrogateur. Selon l'information reçue du groupe d'étiquettes, l'interrogateur réémet un message "lecture 0", ou "lecture 1".

Du côté de l'interrogateur, s'il reçoit un 0, c'est-à-dire s'il ne reçoit rien, alors l'interrogateur retire de la liste l'étiquette I ; au contraire, si l'interrogateur soit un 1, alors il incrémente le compteur d'étiquettes de 1.

Côté étiquette, si elle n'a pas encore répondu présente et si l'interrogateur émet un message de "lecture d'un 1" (cf annexe), alors l'étiquette incrémente son décompteur de numéros d'ordre de 1. Par contre, elle décrémente son décompteur de numéros d'ordre quelle que soit l'émission de l'interrogateur. De plus, l'étiquette sauvegarde la valeur courante du compteur de numéro d'ordre dans son registre de numéros d'ordre, si la valeur du décompteur de numéros d'ordre est à zéro et met à 1 son bit d'inhibition de cycle.

Ces étapes qui viennent d'être décrites sont effectuées N fois, c'est-à-dire autant de fois qu'il y a d'étiquettes déjà listées présentes dans le champ électromagnétique.

Ensuite, l'interrogateur émet une commande de "fin de vérification de liste" (cf annexe) et remet à jour le nombre d'étiquettes.

Les commandes de "début de vérification de liste" permettent d'isoler le groupe d'étiquettes déjà présentes en début de cycle de comptage afin qu'une étiquette pénétrant dans le champ après le début du cycle de comptage ne participe pas à ce cycle ; son compteur de numéros d'ordre serait erroné.

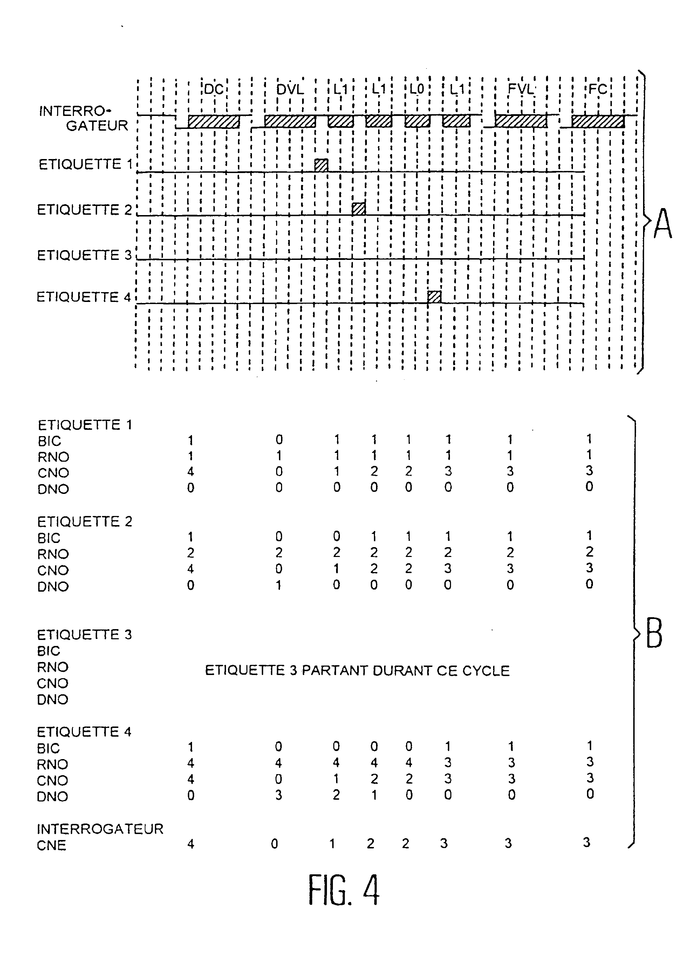

Sur la figure 4, on a représenté schématiquement le chronogramme de la fonction de vérification de liste.

Sur la partie A de cette figure, on a représenté un exemple de chronogramme dans le cas où il y a quatre étiquettes identifiées et déjà listées. L'interrogateur va donc vérifier la présence de ces quatre étiquettes. Pour cela, l'interrogateur émet d'abord une instruction de début de cycle, DC, puis une instruction de "début de vérification de liste", DVL, à laquelle :
- l'étiquette 1 répond par "1" ; il y a donc émission de "lecture d'un 1", L1, (cf annexe) par l'interrogateur ;
- l'étiquette 2 envoie un "1" ; il y a donc à nouveau émission de "lecture d'un 1" par l'interrogateur ;
- l'étiquette 3 ne répond pas ; il y a alors émission de "lecture d'un 0", L0, (cf annexe) par l'interrogateur ;
- l'étiquette 4 envoie aussi un "1" ; il y a donc émission de "lecture d'un 1" par l'interrogateur.

L'interrogateur émet ensuite une instruction de "fin de vérification de liste", puis de "fin de cycle".

Sur la partie B de la figure 4, on a représenté l'état de chacune des quatre étiquettes, ainsi que celui de l'interrogateur. De façon plus précise, on a noté, pour chaque étiquette, l'état du bit d'inhibition du cycle de comptage de chaque étiquette (BIC), l'état du registre de mémorisation du numéro d'ordre précédent (RNO), l'état du compteur de numéro d'ordre courant (CN0) et du décompteur de numéro d'ordre précédent (DNO). On a également noté l'état du compteur de nombre d'étiquettes présentes (CNE) de l'interrogateur.

On remarque sur cette partie B de la figure 4, qu'aucun état n'est donné pour l'étiquette 3, puisque celle-ci est sortie du champ électromagnétique de l'interrogateur avant le début de la vérification de liste.

Il est à noter que le procédé de l'invention, qui vient d'être décrit, peut être associé à tout procédé d'écriture, tel que celui décrit dans la demande de brevet enregistrée sous le numéro 96 15434, ou celui décrit dans la demande de brevet française déposée ce jour par la demanderesse et intitulée "procédé et système de lecture multiple d'un ensemble dynamique d'étiquettes avec synchronisation de communication entre les étiquettes et le lecteur". De même, on peut utiliser, dans le procédé de l'invention, le procédé de lecture multiple par parcours d'arbre, tel que celui décrit dans la demande de brevet française déposée ce jour par la demanderesse et intitulée "procédé et système de lecture multiple d'un ensemble d'étiquettes portant des codes d'identification distincts".

Les principaux messages émis pendant un cycle de lecture et/ou de mise à jour sont les suivants :
Lecture code correct : ce message indique à l'étiquette qui a envoyé son code que celui-ci a été correctement reçu par l'interrogateur. Il permet de gérer les problèmes de frontières de fonctionnement ; il permet aussi aux autres étiquettes non encore lues, ou vérifiées, de gérer l'incrémentation de leur compteur de numéros d'ordre.
Lecture de code erroné : ce message est envoyée par l'interrogateur vers les étiquettes en cas de mauvaise transmission. Il permet de gérer correctement les bascules d'inhibition, ainsi que les compteurs de numéros d'ordre.
Lecture d'un 0 : ce message est retourné par l'interrogateur quand le dernier bit envoyé par les étiquettes est un 0 pendant l'exécution de deux commandes particulières (protocole de lecture multiple et protocole de vérification).
Lecture d'un 1 : ce message est retourné par l'interrogateur quand le dernier bit envoyé par les étiquettes est un 1 pendant l'exécution de deux commandes particulières (protocole de lecture multiple et protocole de vérification de liste).
Début de comptage : cette commande permet aux étiquettes d'initialiser les compteurs de gestion automatique de numéros d'ordre, puis de prendre certains messages afin d'incrémenter ces compteurs.
Fin de comptage : cette commande termine le cycle de comptage. Les numéros d'ordre restent figés jusqu'au prochain cycle de comptage.
Lecture simple : cette commande active une étiquette afin qu'elle émette, en retour, son code d'inhibition complet vers l'interrogateur. Cette émission se fait à condition que le bit d'inhibition de cycle de lecture ne soit pas actif, c'est-à-dire si l'étiquette n'a pas déjà été lue ou vérifiée, pendant le cycle en cours. Si plusieurs étiquettes sont dans ce cas, alors elles vont émettre simultanément et l'interrogateur verra un "code lu erroné" par vérification, par exemple, de l'information de calcul cyclique de détection d'erreur CRC. Il pourra ainsi réagir en conséquence et effectuer une lecture multiple. Cette lecture simple permet de gagner du temps s'il n'y a qu'une seule étiquette présente dans le champ électromagnétique.
Test de présence : cette commande est prise en compte par les étiquettes dont le bit d'inhibition de cycle de comptage n'est pas encore actif. Dans ce cas, l'étiquette renvoie un bit à 1 pour indiquer sa présence. L'interrogateur peut ainsi savoir à tout moment du cycle de comptage s'il y a des étiquettes encore non vues, présentent dans son champ.
Début de vérification de liste : cette commande demande aux étiquettes, déjà lues une première fois au moins et encore présentes dans le champ de l'interrogateur, de répondre présentes à l'appel de leur numéro d'ordre. Cette commande balaie les numéros d'ordre en réémettant un message de lecture d'un 0, ou de lecture d'un 1, après que l'étiquette correspondant au numéro d'ordre courant n'ait pas répondu ou ait répondu par l'émission d'un 1. Ces messages cadencent l'incrémentation automatique du numéro d'ordre en cours de vérification du compteur situé à l'intérieur de chaque étiquette qui n'a pas encore répondu. Lorsque l'étiquette a répondu, elle inhibe son bit de cycle de comptage et mémorise le numéro d'ordre courant qui devient son numéro d'ordre.
Fin de vérification de la liste : les compteurs et registres de numéros d'ordre sont figés.

## Revendications

1. Procédé de lecture d'un ensemble dynamique d'étiquettes (E₁, E₂, E₄) munies chacune d'un code d'identification distinct et situées dans le champ électromagnétique d'un dispositif interrogateur (I), le procédé consistant en une identification des étiquettes par une lecture successive de leurs codes au moyen d'émissions et de réceptions de signaux entre le dispositif interrogateur et les étiquettes, **caractérisé en ce qu'**il consiste à effectuer un premier cycle de lecture (20) pendant lequel chaque étiquette identifiée est inhibée et pendant lequel un numéro d'ordre est affecté à chaque étiquette identifiée, de façon à permettre l'établissement d'une liste de toutes les étiquettes présentes dans le champ du dispositif interrogateur, puis à effectuer, lors de cycles de lecture suivants, une remise à jour (30) de cette liste en réactivant les étiquettes déjà listées, en vérifiant, à partir de réponses ordonnées selon les numéros d'ordre de ces étiquettes, celles qui sont toujours présentes dans le champ et celles qui en sont sorties et en ajoutant les étiquettes qui viennent d'y entrer.

2. Procédé selon la revendication 1,
**caractérisé en ce que**, lors de la remise à jour de la liste d'étiquettes, les numéros d'ordre des étiquettes sont modifiés en fonction des sorties et des entrées d'étiquettes dans le champ de façon à ce que les numéros d'ordre de la liste soient consécutifs.

3. Procédé selon l'une quelconque des revendications 1 et 2, **caractérisé en ce que** le numéro d'ordre de chaque étiquette est déterminé, parallèlement, par l'étiquette elle-même et par le dispositif interrogateur, à partir des informations échangées par les étiquettes et le dispositif interrogateur lors de l'identification des étiquettes.

4. Procédé selon la revendication 3,
**caractérisé en ce que** le numéro d'ordre est initialisé automatiquement au niveau du dispositif interrogateur et au niveau de chaque étiquette.

5. Système de lecture comprenant un ensemble dynamique d'étiquettes et un dispositif interrogateur, les étiquettes (E₁, E₂, E₄) étant munies chacune d'un code d'identification distinct et étant situées dans le champ électromagnétique du dispositif interrogateur (I), les étiquettes étant identifiées par une lecture successive de leurs codes au moyen d'émissions et de réceptions de signaux entre le dispositif interrogateur et les étiquettes, **caractérisé en ce que** le système est apte à effectuer un premier cycle de lecture (20) pendant lequel chaque étiquette identifiée est inhibée et pendant lequel un numéro d'ordre est affecté à chaque étiquette identifiée, de façon à permettre l'établissement d'une liste de toutes les étiquettes présentes dans le champ du dispositif interrogateur, puis à effectuer, lors de cycles de lecture suivants, une remise à jour (30) de cette liste en réactivant les étiquettes déjà listées, en vérifiant, à partir de réponses ordonnées selon les numéros d'ordre de ces étiquettes, celles qui sont toujours présentes dans le champ et celles qui en sont sorties et en ajoutant les étiquettes qui viennent d'y entrer.

6. Système selon la revendication 5,
**caractérisé en ce que** le dispositif interrogateur comporte en outre :
- une mémoire de stockage des codes d'identification ;
- des moyens de séquencement (SI),
- un pointeur (P_{I}) pour pointer sur sa mémoire de stockage ;
- un compteur (C_{I}) pour compter le nombre d'étiquettes présentes ; et
- un registre (R_{I}) de mémorisation du nombre d'étiquettes courantes.

7. Système selon la revendication 5,
**caractérisé en ce que** chaque étiquette comporte :
- des moyens de séquencement (SE) ;
- une mémoire (M_{E}) de stockage du code d'identification ;
- une bascule (B₁) d'état de première lecture du code d'identification ;
- une bascule (B₂) d'inhibition momentanée pour la phase d'identification de son code ; et
- une bascule (B₃) d'inhibition cyclique pour la phase de vérification de la présence de l'étiquette ;
- un registre (R_{E}) de stockage de son numéro d'ordre ;
- un compteur (C_{E}) de numéros d'ordre ; et
- un décompteur (D_{E}) de numéros d'ordre.

## Claims

1. Method for reading a dynamic set of tags (E₁, E₂, E₄), each provided with a distinct identification code and located in the electromagnetic field of a polling device (I), the method consisting of an identification of the tags by a successive reading of their codes by means of transmissions and receptions of signals between the polling device and the tags, **characterized in that** it consists of performing a first read cycle (20) during which each identified tag is inhibited or locked and during which an order number is allocated to each identified tag, so as to permit the establishment of a list of all the tags present in the field of the polling device and then, during following read cycles, performing an updating (30) of each list by reactivating the already listed tags, whilst checking, on the basis of responses arranged according to the order numbers of said tags, those which are still present in the field and those which have left it and whilst adding the tags which have just entered it.

2. Method according to claim 1, **characterized in that**, during the updating of the list of tags, the order numbers of the tags are modified as a function of the entries and exits of tags with respect to the field in such a way that the order numbers of the list are consecutive.

3. Method according to either of the claims 1 and 2, **characterized in that** the order number of each tag is determined in parallel by the tag itself and by the polling device, on the basis of information exchanged by the tags and the polling device during the identification of the tags.

4. Method according to claim 3, **characterized in that** the order number is automatically initialized at the polling device and at each tag.

5. Read system comprising a dynamic set of tags and a polling device, the tags (E₁, E₂, E₄) being in each case provided with a distinct identification code and being located in the electromagnetic field of the polling device (I), the tags being identified by a successive reading of their codes by means of transmissions and receptions of signals between the polling device and the tags, **characterized in that** the system is able to perform a first read cycle (20) during which each identified tag is inhibited or locked and during which an order number is allocated to each identified tag, so as to permit the establishment of a list of all the tags present in the field of the polling device and then, during following read cycles, performing an update (30) of said list by reactivating the already listed tags and checking, on the basis of responses arranged in accordance with the order numbers of the tags, those which are still present in the field and those which have left it and whilst adding the tags which have just entered it.

6. System according to claim 5, **characterized in that** the polling device also comprises:
- a memory for storing identification codes,
- sequencing means (SI),
- a pointer (P_{I}) for pointing at the storage memory,
- a counter (C_{I}) for counting the number of tags present and
- a register (R_{I}) for storing the current number of tags.

7. System according to claim 5, **characterized in that** each tag comprises:
- sequencing means (S_{E}),
- a memory (M_{E}) for storing the identification code,
- an identification code first read status latch (B₁),
- a temporary lock latch (B₂) for the identification phase of its code and
- a cyclic lock latch (B₃) for the checking phase of the presence of the tag,
- a register (R_{E}) for storing its order number,
- an order number counter (C_{E}) and
- an order number down counter (D_{E}).

## Patentansprüche

1. Verfahren zum Lesen einer dynamischen Menge von Etiketten (E₁, E₂, E₃), von denen jede einen anderen Identifikationscode hat und die sich in dem elektromagnetischen Feld einer Abfragevorrichtung (I) befinden, wobei das Verfahren eine Identifikation der Etiketten durch ein sukzessives Lesen ihrer Codes mittels Sendens und Empfangens von Signalen zwischen der Abfragevorrichtung und den Etiketten umfasst,
**dadurch gekennzeichnet, dass** es darin besteht, einen ersten Lesezyklus (20) durchzuführen, während dem jedes identifizierte Etikett gesperrt wird und während dem jedem identifizierten Etikett eine Ordnungsnummer zugeteilt wird, so dass es möglich ist, eine Liste aller in dem Feld der Abfragevorrichtung präsenten Etiketten zu erstellen, dann während nachfolgenden Lesezyklen eine Aktualisierung (30) dieser Liste durchzuführen, indem man die schon aufgelisteten Etiketten reaktiviert und indem man aufgrund von entsprechend den Ordnungsnummern geordneten Antworten diejenigen, welche immer noch in dem Feld präsent sind, sowie diejenigen, welche es verlassen haben, verifiziert, und indem man die Etiketten hinzufügt, die neu dort neu eingedrungen sind.

2. Verfahren nach Anspruch 1, **dadurch gekennzeichnet, dass** bei der Aktualisierung der Etikettenliste die Ordnungsnummern der Etiketten in Abhängigkeit von den in das Feld eindringenden oder es verlassenden Etiketten modifiziert werden, so dass die Ordnungsnummern der Liste aufeinanderfolgend sind.

3. Verfahren nach einem der Ansprüche 1 und 2, **dadurch gekennzeichnet, dass** die Ordnungsnummer jedes Etiketts parallel durch das Etikett selbst und durch die Abfragevorrichtung bestimmt wird aufgrund der zwischen den Etiketten und der Abfragevorrichtung während der Identifikation der Etiketten ausgetauschten Informationen.

4. Verfahren nach Anspruch 3, **dadurch gekennzeichnet, dass** die Ordnungsnummer automatisch in der Abfragevorrichtung und in jeder Etikette initialisiert wird.

5. System zum Lesen einer dynamischen Menge von Etiketten (E₁, E₂, E₃), von denen jede einen anderen Identifikationscode hat und die sich in dem elektromagnetischen Feld einer Abfragevorrichtung (I) befinden, wobei die Etiketten durch ein sukzessives Lesen ihrer Codes mittels Sendens und Empfangens von Signalen zwischen der Abfragevorrichtung und den Etiketten identifiziert werden,
**dadurch gekennzeichnet, dass** das System fähig ist, einen ersten Lesezyklus (20) durchzuführen, während dem jedes identifizierte Etikett gesperrt wird und während dem jedem identifizierten Etikett eine Ordnungsnummer zugeteilt wird, so dass es möglich ist, eine Liste aller in dem Feld der Abfragevorrichtung präsenten Etiketten zu erstellen, dann während nachfolgenden Lesezyklen eine Aktualisierung (30) dieser Liste durchzuführen, indem man die schon aufgelisteten Etiketten reaktiviert und indem man aufgrund von entsprechend den Ordnungsnummern geordneten Antworten diejenigen, welche noch immer in dem Feld präsent sind, sowie diejenigen, welche es verlassen haben, verifiziert, und indem man die Etiketten hinzufügt, die neu dort neu eingedrungen sind.

6. System nach Anspruch 5, **dadurch gekennzeichnet, dass** die Abfragevorrichtung außerdem umfasst:
- einen Identifikationscode-Speicher;
- Sequenzierungseinrichtungen (SI);
- einen Pointer (P_{I}), um auf den Speicher zu zeigen;
- einen Zähler (C_{I}), um die Anzahl der präsenten Etiketten zu zählen; und
- ein Speicherregister (R_{I}) für die Anzahl der laufenden bzw. im Umlauf befindlichen Etiketten.

7. System nach Anspruch 5, **dadurch gekennzeichnet, dass** jedes Etikett umfasst:
- Sequenzierungseinrichtungen (S_{E});
- einen Identifikationscode-Speicher (M_{E});
- eine Identifikationscode-Erstlektürezustands-Kippschaltung (B₁);
- eine momentane Sperrkippschaltung (B₂) für die Identifikationsphase seines Codes; und
- eine zyklische Sperrkippschaltung (B₃) für die Verifikationsphase der Präsenz des Etiketts;
- ein Speicherregister (R_{E}) seiner Ordnungszahl;
- einen Ordnungsnummernzähler (C_{E}); und
- einen Ordnungsnummern-Rückwärtszähler (D_{E}).
